# EUROPEAN PATENT APPLICATION

(11) **EP 3 082 080 A1**
(43) Date of publication of application: **19.10.2016**
(21) Application number: 14869561.2
(22) Date of filing: 09.12.2014
(51) Int. Cl.: G06Q 10/06

(54) **METHOD AND APPARATUS FOR EXITING FROM USER GROUP**

(30) Priority: 11.12.2013 CN 201310676818
(71) Applicant: Tencent Technology (Shenzhen) Co., Ltd, Shenzhen, Guangdong 518000 (CN)
(72) Inventor: ZOU, Yi, Shenzhen Guangdong 518000 (CN)
(74) Representative: Tothill, John Paul
(86) International application number: PCT/CN2014/093372
(87) International publication number: WO 2015/085902

(57) **Abstract**

Disclosed are a method and apparatus for quitting a user group, which includes: receiving from a first terminal corresponding to a user a user identifier, a contract cancellation command input by the user and a group identifier of a user group to which the user belongs; acquiring a contract time length corresponding to the user identifier, and judging whether the user meets a contract cancellation condition or not according to the contract time length; if the user meets the contract cancellation condition, generating a contract cancellation confirmation page, the contract cancellation confirmation page including an interface interaction element for inputting a contract cancellation confirmation command; displaying the contract cancellation confirmation page on the first terminal; receiving the contract cancellation confirmation command from the first terminal; and deleting the user identifier from a user list of the user group, so that the rate of user loss of a voice communication platform may be lowered, and resource waste of a server may be reduced, thereby effectively managing resources on the voice communication platform.

## Description

### CROSS REFERNCE TO RELATED APPLICATIONS

This is a continuation application of International Patent Application No. PCT/CN2014/093372, filed on December 9, 2014, which claims priority to Chinese Patent Application No. 201310676818.0 filed on December 11, 2013 and titled with "method and apparatus for quitting user group", the disclosure of which is incorporated by reference herein in its entirety.

### TECHNICAL FIELD

The present disclosure relates to the technical field of Internet, and in particular to a method and apparatus for quitting a user group.

### BACKGROUND

At present, a voice communication platform introduces an entertainment studio mode, a user may be registered as an anchor on the voice communication platform, and the anchor may broadcast live using a voice communication tool in a voice chat room in the entertainment studio mode.

On a voice communication platform, unified management over users in user groups may be implemented by taking a user group as a unit, and the users joining the user groups form a contract relationship with the user groups. For example, after a user as an anchor joins a user group, the anchor provides agreed live broadcast service in a voice chat room where the user group is located, and obtains promised payment.

A contract between a user and a user group may also be cancelled. There are two ways for contract cancellation, including uncontested contract cancellation and forced contract cancellation. The uncontested contract cancellation refers to the contract cancellation which requires confirmation of the opposite party after initiation by one party, and the forced contract cancellation refers to the contract cancellation which does not require the confirmation of the opposite party after the initiation by one party. In a traditional technology, a user group may not be punished if a manager of the user group initiates forced contract cancellation, but a user therein initiating forced contract cancellation may be punished, for example, an anchor initiating forced contract cancellation may deserve a punishment of not using a voice communication tool for live broadcast for one month. Such a way for contract cancellation is obviously unfair, which may cause users to leave a voice communication platform and even put a great number of resources of a server to one side, and thus is bad for resource management in the voice communication platform.

### SUMMARY

To solve the problems above, the embodiments of the present disclosure provide a method and apparatus for quitting a user group, which may reduce idle resources, thereby effectively managing resources on a voice communication platform.

According to one aspect of the embodiments of the present disclosure, a method for quitting a user group is provided, including:
receiving, from a first terminal corresponding to a user, a user identifier, a contract cancellation command input by the user and a group identifier of a user group to which the user belongs;
acquiring a contract time length corresponding to the user identifier, and judging whether the user meets a contract cancellation condition or not according to the contract time length;
if the user meets the contract cancellation condition, then generating a contract cancellation confirmation page, the contract cancellation confirmation page including an interface interaction element for inputting a contract cancellation confirmation command;
displaying the contract cancellation confirmation page on the first terminal;
receiving the contract cancellation confirmation command from the first terminal; and
deleting the user identifier from a user list of the user group.

According to another aspect of the embodiments of the present disclosure, an apparatus for quitting a user group is provided, including:
a receiving module, configured to receive, from a first terminal corresponding to a user, a user identifier, a contract cancellation command input by the user and a group identifier of a user group to which the user belongs;
a contract cancellation judgment module, configured to acquire a contract time length corresponding to the user identifier, and judge whether the user meets a contract cancellation condition or not according to the contract time length;
a page generation module, configured to, if the user meets the contract cancellation condition, generate a contract cancellation confirmation page, the contract cancellation confirmation page including an interface interaction element for inputting a contract cancellation confirmation command;
a display module, configured to display the contract cancellation confirmation page on the first terminal;
the receiving module further configured to receive the contract cancellation confirmation command from the first terminal; and
a deletion module, configured to delete the user identifier from a user list of the user group.

According to the method and apparatus for quitting a user group, a contract time length corresponding to a user identifier is acquired after a contract cancellation command is received from the first terminal, then whether the user meets a contract cancellation condition or not may be judged according to the contract time length, a contract cancellation confirmation page is generated and displayed on the first terminal if the user meets the contract cancellation condition, and the user identifier is deleted from a user list of the user group after a contract cancellation confirmation command is received from the first terminal. In such a manner, for a user initiating forced contract cancellation, a contract may be cancelled only after the user meets a contract cancellation condition and the contract cancellation is reconfirmed. Compared with a conventional manner of directly punishing the user who initiates forced contract cancellation, the solution here has the advantage that the rate of user loss of a voice communication platform may be lowered, thereby reducing idle resources and effectively managing the resources on the voice communication platform.

### BRIEF DESCRIPTION OF THE DRAWINGS

Fig. 1 is a flowchart of a method for quitting a user group according to one embodiment;
Fig. 2 is a flowchart of a method for quitting a user group according to another embodiment;
Fig. 3 is a flowchart of a method for quitting a user group according to a yet another embodiment;
Fig. 4 is a flowchart of a method for quitting a user group according to a still another embodiment;
Fig. 5 is a diagram of a contract cancellation confirmation interface provided by an embodiment shown in Fig. 4;
Fig. 6 is a diagram of a contract cancellation forbidding interface provided by an embodiment shown in Fig. 4;
Fig. 7A is a diagram of a contract cancellation notification interface displayed on a second terminal corresponding to a manager;
Fig. 7B is a diagram of another contract cancellation notification interface displayed on a second terminal corresponding to a manager;
Fig. 8 is a structure diagram of an apparatus for quitting a user group according to an embodiment;
Fig. 9 is a structure diagram of a page generation module according to one embodiment;
Fig. 10 is a structure diagram of a page generation module according to another embodiment; and
Fig. 11 is a structure diagram of a page generation module according to a yet another embodiment.

### DETAILED DESCRIPTION

In order to make a purpose, technical solutions and advantages of the present disclosure clearer, the present disclosure is further described below with reference to the drawings and embodiments in detail. It should be understood that the specific embodiments described here are only adopted to explain the present disclosure and not intended to limit the present disclosure.

There may be one or multiple elements and components in the present disclosure, and no limits are made to the number of the elements and the components, unless otherwise described specifically and clearly in the context. Numbers are adopted for arrangement of steps in the present disclosure but not intended to limit a sequence of the steps, and the sequence of the steps may be changed unless the sequence of the steps is specified or a certain step is required to be executed on the basis of another step. It should be understood that term "and/or" in the present disclosure involves or covers one or any and all possible combinations of more than one of associated elements which are listed.

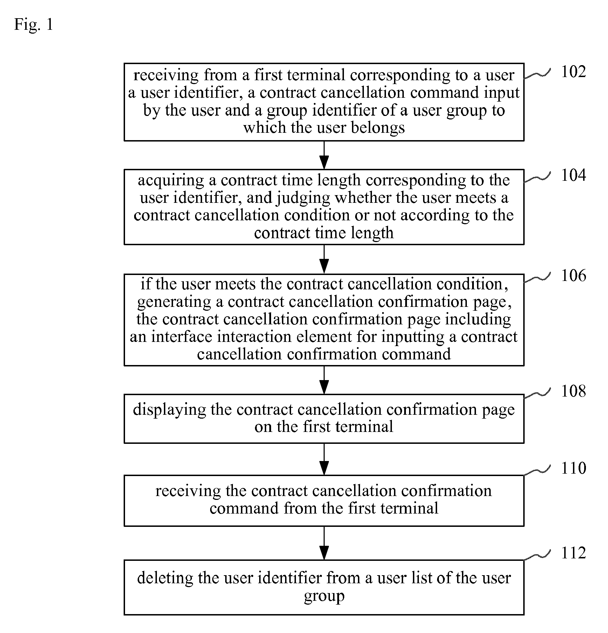

As shown in Fig. 1, a method for quitting a user group is provided in one embodiment, which includes:
Step 102: receiving, from a first terminal corresponding to a user, a user identifier, a contract cancellation command input by the user, and a group identifier of a user group to which the user belongs.
   In one embodiment, the user may enter a contract cancellation interface through the first terminal, the contract cancellation interface including contract description information, contract state information and an interface interaction element for inputting the contract cancellation command; wherein the contract description information may be description information for describing an income earning manner of the user, and the contract state information may include a group name of the group to which the user belongs, contract time, a preset reference line, income data in a recent period, a comparison result of comparison of the income data with the preset reference line in the recent period, and the like;
Step 104: acquiring a contract time length corresponding to the user identifier, and judging whether the user meets a contract cancellation condition or not according to the contract time length;
Step 106: if the user meets the contract cancellation condition, generating a contract cancellation confirmation page, the contract cancellation confirmation page including an interface interaction element for the user to input a contract cancellation confirmation command;
   specifically, the contract cancellation confirmation page may further include contract state information, and the contract state information may include the group name of the group to which the user belongs, the contract time, the preset reference line, the income data in the recent period, the comparison result of comparison of the income data with the preset reference line in the recent period, and the like. The interface interaction element may be a contract cancellation confirmation button, and the user inputs the contract cancellation confirmation command through the contract cancellation confirmation button;
Step 108: displaying the contract cancellation confirmation page on the first terminal;
Step 110: receiving the contract cancellation confirmation command from the first terminal; and
Step 112: deleting the user identifier from a user list of the user group.

Specifically, the user list corresponding to the group identifier of the user group to which the user belongs is acquired, the user identifier forming a contract relationship with the user group is recorded in the user list, and furthermore, the user identifier containing the contract cancellation confirmation command is deleted from the user list, thereby enabling the user to quit the user group.

In the embodiment, for a user initiating forced contract cancellation, a contract may be cancelled only after the user meets a contract cancellation condition and the contract cancellation is reconfirmed; compared with a conventional manner of directly punishing the user who initiates forced contract cancellation, such a manner has the advantage that the rate of user loss of a voice communication platform may be lowered, thereby reducing idle resources and effectively managing resources on the voice communication platform.

The contract time length corresponding to the user identifier refers to a time difference between starting time of a contract and current time. In one embodiment, Step 104 includes judging whether the contract time length reaches a time threshold or not, determining that the user meets the contract cancellation condition if the contract time length reaches the time threshold, otherwise determining that the user does not meet the contract cancellation condition. In the embodiment, the time threshold is preset, and the user is allowed to quit the user group when the contract time length reaches the time threshold, so that resource waste of a server caused by free forced contract cancellation of the user may be prevented.

In another embodiment, Step 104 includes judging whether the contract time length reaches a time threshold or not, further judging whether the current time is within a preset time interval or not if the contract time length reaches the time threshold, determining that the user meets the contract cancellation condition if the current time is within the preset time interval, otherwise if the current time is not within the preset time interval, determining that the user does not meet the contract cancellation condition; and if the contract time length does not reach the time threshold or the current time is not within the preset time interval, determining that the user does not meet the contract cancellation condition. In the embodiment, the user is allowed to quit the user group only when the contract time length reaches the time threshold and the current time is within the preset time interval, so that resource waste of a server caused by free forced contract cancellation of the user may be prevented, unified settlement of compensation to be paid by the user within a preset time period may also be implemented, and resources of the server are further saved.

In one embodiment, the method for quitting a user group further includes: if the contract time length does not reach the time threshold, generating a contract cancellation forbidding page, the contract cancellation forbidding page including prompting information for describing that the user is not allowed to apply for contract cancellation. In the embodiment, if the contract time length does not reach the time threshold, the user is forbidden to quit the user group, the contract cancellation forbidding page is displayed on the first terminal after the contract cancellation forbidding page is generated, the contract cancellation forbidding page may further include the contract state information, the prompting information which describes that the user is not allowed to apply for contract cancellation may include prompting information for describing a reason why the user is not allowed to apply for contract cancellation and a related interface element, and the related interface element may be a contract cancellation confirmation button with incapability of receiving input.

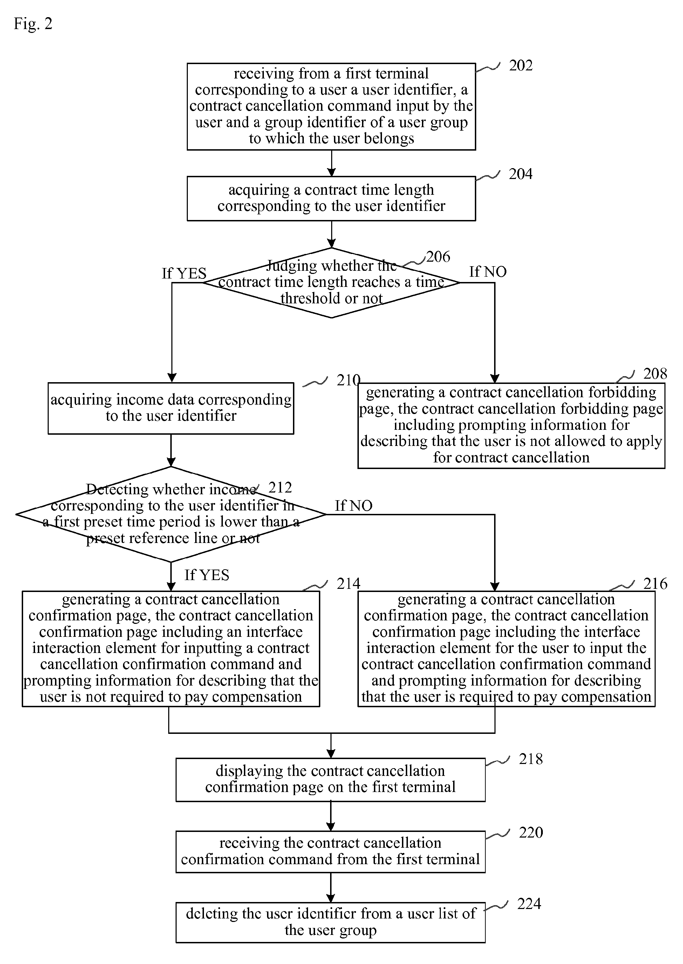

In one embodiment, a method for quitting a user group, as shown in Fig. 2, includes:
Step 202: receiving, from a first terminal corresponding to a user, a user identifier, a contract cancellation command input by the user and a group identifier of a user group to which the user belongs;
Step 204: acquiring a contract time length corresponding to the user identifier;
Step 206: judging whether the contract time length reaches a time threshold or not, entering Step 210 if the contract time length reaches the time threshold, otherwise entering Step 208;
Step 208: generating a contract cancellation forbidding page, the contract cancellation forbidding page including prompting information for describing that the user is not allowed to apply for contract cancellation;
Step 210: acquiring income data corresponding to the user identifier;
Step 212: detecting whether income corresponding to the user identifier in a first preset time period is lower than a preset reference line or not, entering Step 214 if lower, otherwise entering Step 216;
Step 214: generating a contract cancellation confirmation page, the contract cancellation confirmation page including an interface interaction element for inputting a contract cancellation confirmation command and prompting information for describing that the user is not required to pay compensation;
   the reference line may be preset in background, and may be set according to income data of all users in a previous period of time. Furthermore, the reference line may be set every time a preset time interval is reached, for example, the reference line is set every month. For example, it is May, and then a reference line corresponding to May is set with reference to income data of all the users in the last month, i.e. April;
   the first preset time period may be a time period closest to current time, for example, it is detected whether income corresponding to the user identifier within recent 31 days is lower than the preset reference line or not, and if lower, the user is required to pay a certain compensation for contract cancellation, otherwise, the user is not required to pay any compensation for contract cancellation;
Step 216: generating a contract cancellation confirmation page, the contract cancellation confirmation page including the interface interaction element for the user to input the contract cancellation confirmation command and prompting information for describing that the user is required to pay compensation;
   in one embodiment, before Step 216, income corresponding to the user identifier within a second preset time period may further be acquired, and a compensation amount to be paid by the user is calculated according to the income corresponding to the user identifier within the second preset time period, the contract cancellation confirmation page further includes the compensation amount to be paid by the user;
   specifically, a percentage of the compensation amount to be paid by the user and the income corresponding to the user identifier within the second preset time period is calculated. For example, if the income within the second preset time period is the income of the user in the recent 31 days, the compensation amount to be paid by the user is calculated to be 20 percent of the income of the user within the recent 31 days;
Step 218: displaying the contract cancellation confirmation page on the first terminal;
Step 220: receiving the contract cancellation confirmation command from the first terminal; and
Step 224: deleting the user identifier from a user list of the user group.

If the income corresponding to the user identifier within the first preset time period is higher than the preset reference line, that is, the user is required to pay compensation for contract cancellation, the method, after Step 224, further includes deducting the compensation amount to be paid by the user from the income data corresponding to the user identifier.

In the embodiment, when it is detected that the income corresponding to the user identifier within the first preset time period is higher than the reference line, the contract cancellation confirmation page including the prompting information for describing that the user is required to pay the compensation is generated, and a contract may be cancelled only after the user pays a certain compensation, so that the rate of user loss of a voice communication platform may be effectively lowered, resource waste of a server may be reduced, and resources on the voice communication platform are effectively managed.

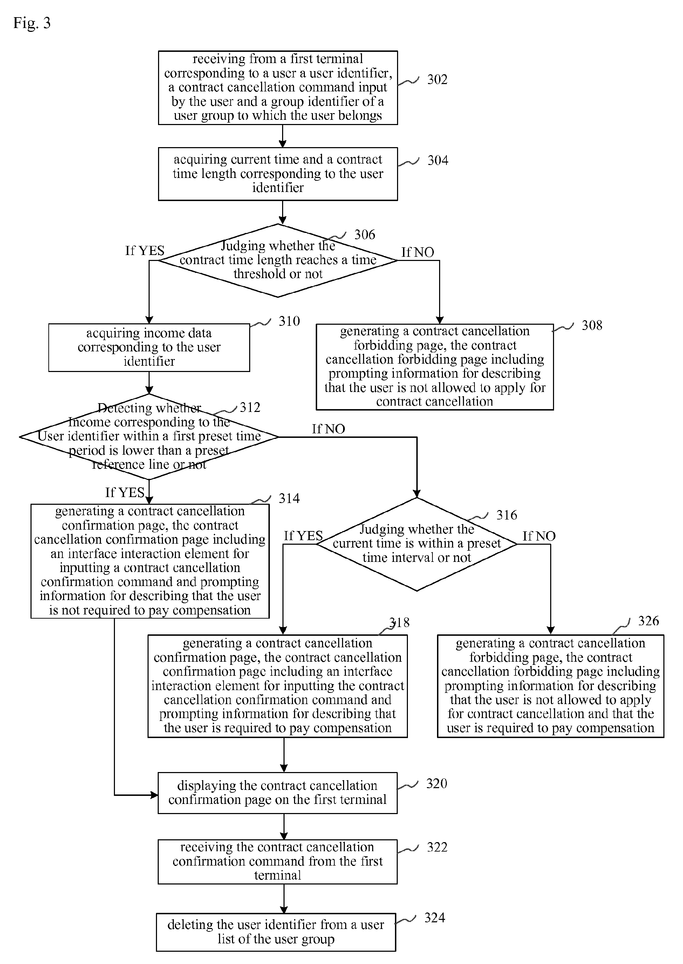

In another embodiment, a method for quitting a user group, as shown in Fig. 3, includes:
Step 302: receiving, from a first terminal corresponding to a user, a user identifier, a contract cancellation command input by the user, and a group identifier of a user group to which the user belongs;
Step 304: acquiring current time and a contract time length corresponding to the user identifier;
Step 306: judging whether the contract time length reaches a time threshold or not, entering Step 310 if the contract time length reaches the time threshold, otherwise entering Step 308;
Step 308: generating a contract cancellation forbidding page, the contract cancellation forbidding page including prompting information for describing that the user is not allowed to apply for contract cancellation;
Step 310: acquiring income data corresponding to the user identifier;
Step 312: detecting whether income corresponding to the user identifier within a first preset time period is lower than a preset reference line or not, entering Step 314 if lower, otherwise entering Step 316;
Step 314: generating a contract cancellation confirmation page, the contract cancellation confirmation page including an interface interaction element for inputting a contract cancellation confirmation command and prompting information for describing that the user is not required to pay compensation;
Step 316: judging whether the current time is within a preset time interval or not, entering Step 318 if the current time is within the preset time interval, otherwise entering Step 326;
Step 318: generating a contract cancellation confirmation page, the contract cancellation confirmation page including the interface interaction element for inputting the contract cancellation confirmation command and prompting information for describing that the user is required to pay compensation;
   in one embodiment, before Step 318, income corresponding to the user identifier within a second preset time period may further be acquired, and a compensation amount to be paid by the user is calculated according to the income corresponding to the user identifier within the second preset time period, the contract cancellation confirmation page further includes the compensation amount to be paid by the user;
Step 320: displaying the contract cancellation confirmation page on the first terminal;
Step 322: receiving the contract cancellation confirmation command from the first terminal;
Step 324: deleting the user identifier from a user list of the user group;
   if the income corresponding to the user identifier within the first preset time period is higher than the preset reference line, that is, the user is required to pay compensation for contract cancellation, the method, after Step 324, further includes deducting the compensation amount to be paid by the user from the income data corresponding to the user identifier; and
Step 326: generating a contract cancellation forbidding page, the contract cancellation forbidding page including prompting information for describing that the user is not allowed to apply for contract cancellation and that the user is required to pay compensation.

The prompting information for describing that the user is required to pay compensation in the contract cancellation forbidding page may further include the compensation amount to be paid by the user, the contract cancellation forbidding page may further include contract state information, the prompting information which describes that the user is not allowed to apply for contract cancellation may include prompting information for describing a reason why the user is not allowed to apply for contract cancellation and a related interface element, and the related interface element may be a contract cancellation confirmation button with incapability of receiving input. Furthermore, the contract cancellation forbidding page is displayed on the first terminal.

In the embodiment, when the income of the user within the first preset time period is higher than the preset reference line, the user may cancel a contract only when the current time is within the preset time interval, so that unified settlement of the compensation is facilitated, and resources of the server are saved.

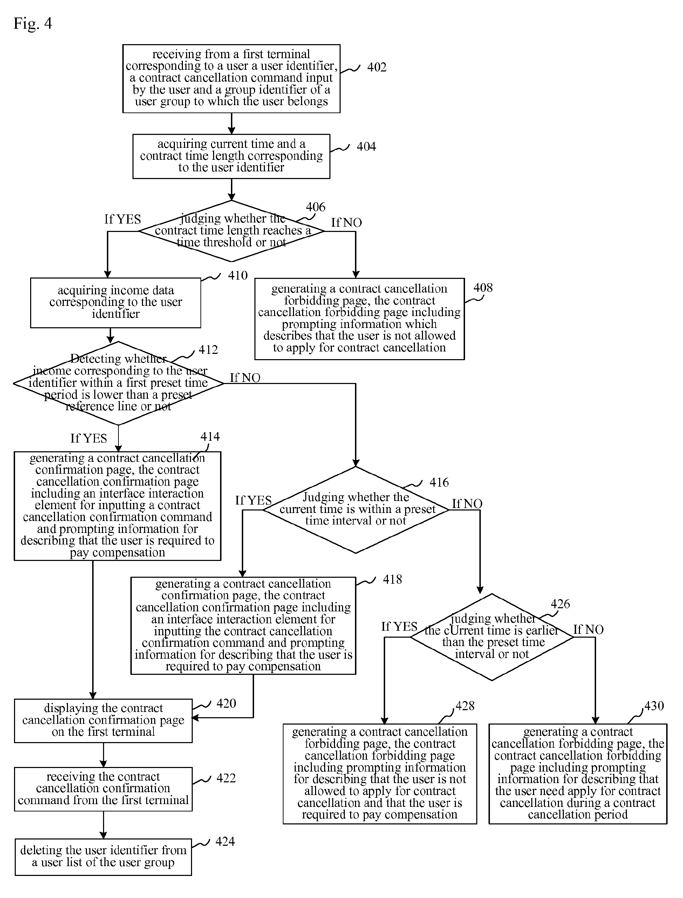

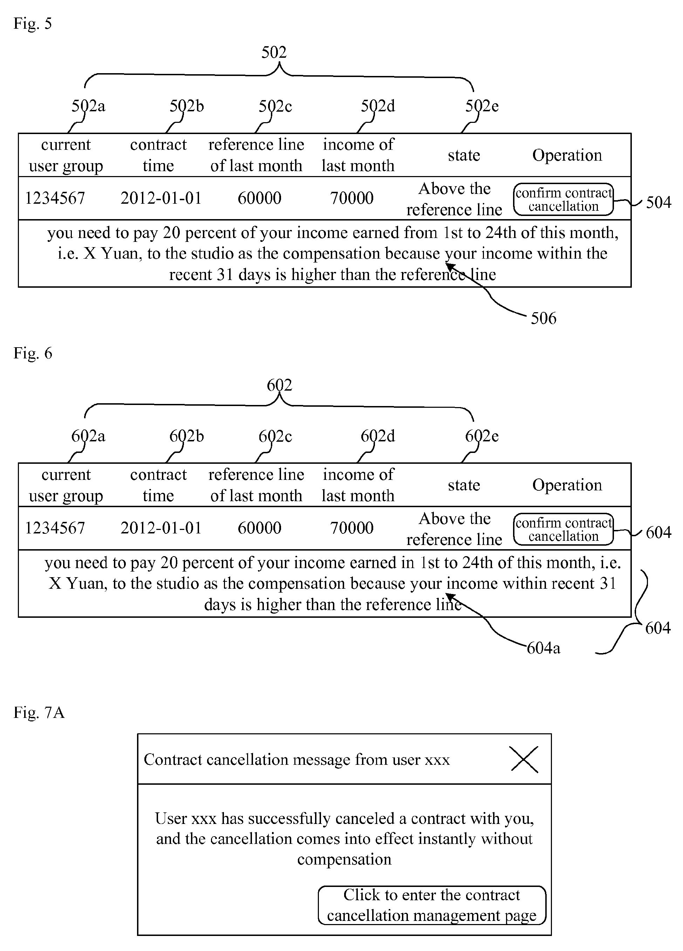

In another embodiment, a method for quitting a user group, as shown in Fig. 4, includes:
Step 402: receiving, from a first terminal corresponding to a user, a user identifier, a contract cancellation command input by the user, and a group identifier of a user group to which the user belongs;
Step 404: acquiring current time and a contract time length corresponding to the user identifier;
Step 406: judging whether the contract time length reaches a time threshold or not, entering Step 410 if the contract time length reaches the time threshold, otherwise entering Step 408;
Step 408: generating a contract cancellation forbidding page, the contract cancellation forbidding page including prompting information which describes that the user is not allowed to apply for contract cancellation;
   the prompting information which describes that the user is not allowed to apply for contract cancellation may include prompting information for describing a reason why the user is not allowed to apply for contract cancellation and a related interface element, the related interface element may be a contract cancellation confirmation button incapable of receiving input, for example, the contract cancellation confirmation button is displayed in grey, the contract cancellation confirmation button may not receive any input command, and the prompting information may be "you are not allowed to apply for contract cancellation because you have signed a contract with the studio for less than 31 days";
Step 410: acquiring income data corresponding to the user identifier;
Step 412: detecting whether income corresponding to the user identifier within a first preset time period is lower than a preset reference line or not, entering Step 414 if lower, otherwise entering Step 416;
Step 414: generating a contract cancellation confirmation page, the contract cancellation confirmation page including an interface interaction element for inputting a contract cancellation confirmation command and prompting information for describing that the user is required to pay compensation;
   the interface interaction element for inputting the contract cancellation confirmation command may be a contract cancellation confirmation button for inputting the contract cancellation confirmation command, for example, the contract cancellation confirmation button is highlighted and the prompting information may be "you are allowed to apply for contract cancellation because your income within recent 31 days is lower than the reference line, and contract cancellation comes into effect immediately without compensation";
Step 416: judging whether the current time is within a preset time interval or not, entering Step 418 if the current time is within the preset time interval, otherwise entering Step 426;
Step 418: generating a contract cancellation confirmation page, the contract cancellation confirmation page including the interface interaction element for inputting the contract cancellation confirmation command and prompting information for describing that the user is required to pay compensation;
   the preset time interval may be a fixed time interval in each month, for example, 25th to 27th of each month.
   As shown in Fig. 5, the contract cancellation confirmation page further includes contract state information 502, and the contract state information 502 includes a group name 502a of the group to which the user belongs, contract time 502b, the preset reference line 502c, income data 502d in a recent period and a comparison result 502e of comparison of the income data with the preset reference line in the recent period. The interface interaction element for inputting the contract cancellation confirmation command may be a contract cancellation confirmation button 504.
   In one embodiment, before Step 418, income corresponding to the user identifier within a second preset time period may further be acquired, and a compensation amount to be paid by the user is calculated according to the income corresponding to the user identifier within the second preset time period, the contract cancellation confirmation page further including the compensation amount to be paid by the user.
   The second preset time period may be a fixed time period in each month, for example, 1st to 24th of each month. Calculating the compensation amount to be paid by the user may refer to calculating a percentage of the compensation amount to be paid by the user and the income of the user within the second preset time period. As shown in Fig. 5, the prompting information 506 is "you need to pay 20 percent of your income earned from 1st to 24th of this month, i.e. X Yuan, to the studio as the compensation because your income within the recent 31 days is higher than the reference line". Contract cancellation comes into effect immediately, and the compensation may be deducted in a unified manner during monthly closing of this month;
Step 420: displaying the contract cancellation confirmation page on the first terminal;
Step 422: receiving the contract cancellation confirmation command from the first terminal;
Step 424: deleting the user identifier from a user list of the user group;
   specifically, after the contract cancellation confirmation command is received from the first terminal, a secondary contract cancellation confirmation page may be generated, the secondary contract cancellation confirmation page including secondary prompting information and an interface interaction element for inputting a secondary contract cancellation confirmation command, for example, the secondary prompting information may be "contract cancellation comes into effect immediately and whether to confirm contract cancellation or not (you will pay 100 Yuan as compensation which will be deducted when settlement is made this month)", and after the secondary contract cancellation confirmation command is received from the first terminal, the user identifier is deleted from the user list of the user group;
Step 426: judging whether the current time is earlier than the preset time interval or not, entering Step 428 if earlier, otherwise entering Step 430;
Step 428: generating a contract cancellation forbidding page, the contract cancellation forbidding page including prompting information for describing that the user is not allowed to apply for contract cancellation and that the user is required to pay compensation;
   in one embodiment, before Step 428, the income corresponding to the user identifier within the second preset time period may further be acquired, and a compensation amount to be paid by the user is calculated according to the income corresponding to the user identifier within the second preset time period, the contract cancellation confirmation page further includes the compensation amount to be paid by the user;
   as shown in Fig. 6, the contract cancellation forbidding page includes contract state information 602, the contract state information 602 includes a group name 602a of the group to which the user belongs, contract time 602b, the preset reference line 602c, income data 602d in a recent period and a comparison result 602e of comparison of the income data with the preset reference line in the recent period, the prompting information 604 includes prompting information 604a for describing that the user is required to pay compensation, for example, "you need to pay 20 percent of your income earned from 1st to 24th of this month, i.e. X Yuan, to the studio as the compensation because your income within recent 31 days is higher than the reference line", the prompting information 604 further includes a contract cancellation confirmation button 604b incapable of receiving input, and when the contract cancellation confirmation button 604b is pressed, the prompting information "you can only apply for contract cancellation on 25th-27th of this month because your income within the recent 31 days is higher than the reference line" appears;
Step 430: generating a contract cancellation forbidding page, the contract cancellation forbidding page including prompting information for describing that the user need apply for contract cancellation during a contract cancellation period.

For example, the prompting information may be "your income within the recent 31 days is higher than the reference line, and since contract cancellation time of this month has expired, please apply for contract cancellation on next 25th to 27th". The contract cancellation forbidding page may further include the contract cancellation confirmation button incapable of receiving input, and when the contract cancellation confirmation button is triggered, prompting information "since your income within the recent 31 days is higher than the reference line, you can apply for contract cancellation only on next 25th to 27th" is displayed.

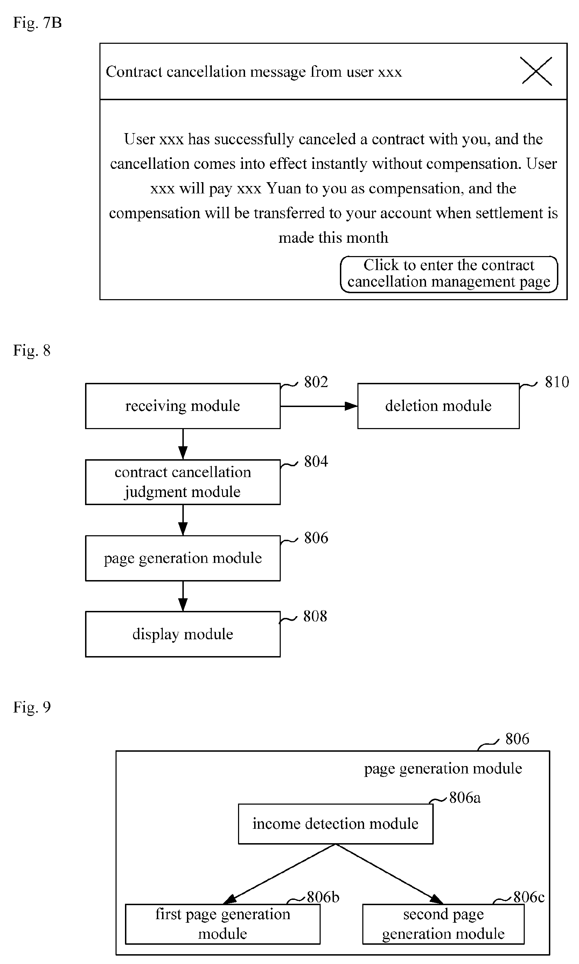

Furthermore, after the contract cancellation forbidding page is generated, the contract cancellation forbidding page may be displayed on the first terminal. After the contract cancellation confirmation page is generated, the contract cancellation confirmation page may be displayed on the first terminal, the secondary contract cancellation confirmation command is received from the first terminal, and the user identifier is deleted from the user list of the user group according to the secondary contract cancellation confirmation command. Then a contract cancellation notification page is generated, and the contract cancellation notification page is sent to a second terminal corresponding to a manager of the user group. If the user is not required to pay any compensation, the contract cancellation notification page displayed on the second terminal is shown in Fig. 7A, and if the user is required to pay compensation, the contract cancellation notification page displayed on the second terminal is shown in Fig. 7B.

In the embodiment, different processing is adopted for conditions that the current time is within different time zones, and only when the current time is within a preset time interval, the user can cancel a contract. In such a manner, it is good for unified settlement of compensation, and resources of the server are saved.

Furthermore, in one embodiment, the method for quitting a user group may further include: receiving, from the second terminal corresponding to the manager of the user group, a user identifier, a contract cancellation command and the group identifier of the user group to which the user belongs; generating a contract cancellation link; sending the contract cancellation link to the first terminal corresponding to the user; receiving the contract cancellation confirmation command from the first terminal; and deleting the user identifier from the user list of the user group. In the embodiment, contract cancellation may be initiated by the second terminal corresponding to the manager of the user group, and if the user confirms contract cancellation, the user quits the user group.

Furthermore, whether the contract cancellation confirmation command is received from the first terminal within a preset time or not may be judged, and if the contract cancellation confirmation command is not received from the first terminal within the preset time (for example, 7 days), the user identifier is deleted from the user list of the user group. Contract cancellation automatically comes into effect.

The first terminal and second terminal in the embodiment include, but not limited to, various desktop computers, portable laptop computers, personal digital assistants, tablet computers, smart phones, E-book readers, Moving Picture Experts Group Audio Layer III (MP3) or Moving Picture Experts Group Audio Layer IV (MP4) players, Point Of Sale (POS) terminals, onboard computers and the like.

As shown in Fig. 8, an apparatus for quitting a user group is further provided, which includes:
a receiving module 802, configured to receive, from a first terminal corresponding to a user, a user identifier, a contract cancellation command input by the user and a group identifier of a user group to which the user belongs;
a contract cancellation judgment module 804, configured to acquire a contract time length corresponding to the user identifier, and judge whether the user meets a contract cancellation condition or not according to the contract time length;
a page generation module 806, configured to, if the user meets the contract cancellation condition, generate a contract cancellation confirmation page, the contract cancellation confirmation page including an interface interaction element for inputting a contract cancellation confirmation command, wherein
the contract cancellation confirmation page may specifically include contract state information, the contract state information may include a group name of the group to which the user belongs, contract time, a preset reference line, income data in a recent period, a comparison result of comparison of the income data with the preset reference line in the recent period, and the like, the interface interaction element may be a contract cancellation confirmation button, and the user inputs the contract cancellation confirmation command through the contract cancellation confirmation button;
a display module 808, configured to display the contract cancellation confirmation page on the first terminal;
the receiving module 802 in the embodiment further configured to receive the contract cancellation confirmation command from the first terminal; and
a deletion module 810, configured to delete the user identifier from a user list of the user group.

Specifically, the deletion module 810 is configured to acquire the user list corresponding to the group identifier of the user group to which the user belongs, the user identifier forming a contract relationship with the user group being recorded in the user list, and furthermore, delete the user identifier containing the contract cancellation confirmation command from the user list, thereby enabling the user to quit the user group.

The contract time length corresponding to the user identifier refers to a time difference between starting time of a contract and current time.

In one embodiment, the contract cancellation judgment module 804 is configured to judge whether the contract time length reaches a time threshold or not, determine that the user meets the contract cancellation condition if the contract time length reaches the time threshold, otherwise determine that the user does not meet the contract cancellation condition.

In another embodiment, the contract cancellation judgment module 804 is configured to judge whether the contract time length reaches a time threshold or not, further judge whether the current time is within a preset time interval or not if the contract time length reaches the time threshold, determine that the user meets the contract cancellation condition if the current time is within the preset time interval, otherwise determine that the user does not meet the contract cancellation condition if the current time is not within the preset time interval; and if the contract time length does not reach the time threshold or the current time is not within the preset time interval, determine that the user does not meet the contract cancellation condition.

In one embodiment, the page generation module 806 is further configured to generate a contract cancellation forbidding page if the contract time length does not reach a time threshold, the contract cancellation forbidding page including prompting information for describing that the user is not allowed to apply for contract cancellation. In the embodiment, the contract cancellation forbidding page may further include the contract state information, the prompting information which describes that the user is not allowed to apply for contract cancellation may include prompting information for describing a reason why the user is not allowed to apply for contract cancellation and a related interface element, and the related interface element may be a contract cancellation confirmation button incapable of receiving input.

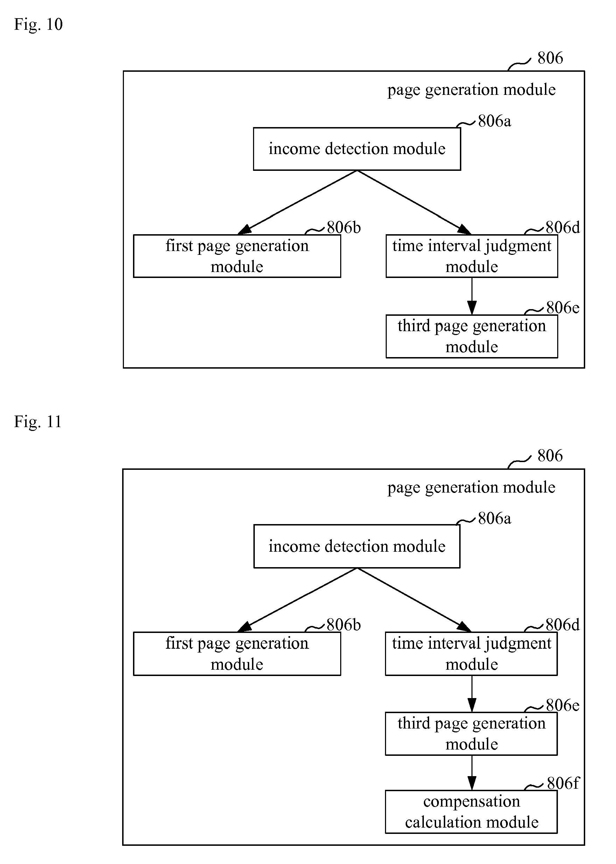

In one embodiment, the page generation module 806, as shown in Fig. 9, may include:
an income detection module 806a, configured to acquire income data corresponding to the user identifier if the contract time length reaches the time threshold, and detect whether income corresponding to the user identifier within a first preset time period is lower than the preset reference line or not;
a first page generation module 806b, configured to generate the contract cancellation confirmation page if the income corresponding to the user identifier within the first preset time period is lower than the preset reference line, the contract cancellation confirmation page including the interface interaction element for the user to input the contract cancellation confirmation command and prompting information for describing that the user is not required to pay compensation; and
a second page generation module 806c, configured to generate a contract cancellation confirmation page if the income corresponding to the user identifier within the first preset time period is higher than the preset reference line, the contract cancellation confirmation page including the interface interaction element for the user to input the contract cancellation confirmation command and prompting information for describing that the user is required to pay compensation.
In another embodiment, except the income detection module 806a and the first page generation module 806b, the page generation module 806 as shown in Fig. 10 further includes:
a time interval judgment module 806d, configured to judge whether the current time is within the preset time interval or not if the income corresponding to the user identifier within the first preset time period is higher than the preset reference line; and
a third page generation module 806e, configured to generate the contract cancellation confirmation page if the current time is within the preset time interval, the contract cancellation confirmation page including the interface interaction element for inputting the contract cancellation confirmation command and the prompting information for describing that the user is required to pay compensation.

In one embodiment, on the basis of the embodiment shown in Fig. 10, the page generation module 806, as shown in Fig. 11, may further include:
a compensation calculation module 806f, configured to acquire income corresponding to the user identifier within a second preset time period, and calculate a compensation amount to be paid by the user according to the income corresponding to the user identifier within the second preset time period, the contract cancellation confirmation page further including the compensation amount to be paid by the user.

It should be understood that the page generation module 806 may further include the compensation calculation module 806f on the basis of the embodiment shown in Fig. 9.

Furthermore, in one embodiment, the time interval judgment module 806d is further configured to judge whether the current time is earlier than the preset time interval or not if the current time is not within the preset time interval; and the third page generation module 806e is further configured to generate a contract cancellation forbidding page if the current time is earlier than the preset time interval, the contract cancellation forbidding page including prompting information for describing that the user is not allowed to apply for contract cancellation and that the user is required to pay compensation.

Furthermore, in another embodiment, the time interval judgment module 806d is further configured to judge whether the current time is earlier than the preset time interval or not if the current time is not within the preset time interval; and the third page generation module 806e is further configured to generate a contract cancellation forbidding page if the current time is earlier than the preset time interval, the contract cancellation forbidding page including prompting information for describing that the user need apply for contract cancellation during contract cancellation.

Those skilled in the art should know that all or a part of flows in the methods in the embodiments may be implemented by related hardware under instruction of a computer program, the program may be stored in a computer-readable storage medium, for example, in the embodiment of the present disclosure, the program may be stored in a storage medium of a computer system, and is executed by at least one processor in the computer system, so as to implement the flows of the embodiments including each of the abovementioned methods. The storage medium may be a disk, a compact disc, a Read-Only Memory (ROM) or a Random Access Memory (RAM).

The foregoing detailed descriptions are merely several implementation modes of the present disclosure, but are not intended to limit the present disclosure. It should be pointed out that to those skilled in the art, any modifications and improvements made without departing from the concept of the present disclosure shall fall within the protection scope of the present disclosure. Therefore, the protection scope of the present disclosure should be subject to the appended claims.

## Claims

1. A method for quitting a user group, comprising:
receiving, from a first terminal corresponding to a user, a user identifier, a contract cancellation command input by the user and a group identifier of a user group to which the user belongs;
acquiring a contract time length corresponding to the user identifier, and judging whether the user meets a contract cancellation condition or not according to the contract time length;
if the user meets the contract cancellation condition, then generating a contract cancellation confirmation page, the contract cancellation confirmation page comprising an interface interaction element for inputting a contract cancellation confirmation command;
displaying the contract cancellation confirmation page on the first terminal;
receiving the contract cancellation confirmation command from the first terminal; and
deleting the user identifier from a user list of the user group.

2. The method according to claim 1, wherein the step of judging whether the user meets a contract cancellation condition or not according to the contract time length comprises:
judging whether the contract time length reaches a time threshold or not;
if the contract time length reaches the time threshold, then determining that the user meets the contract cancellation condition; otherwise, determining that the user does not meet the contract cancellation condition.

3. The method according to claim 1, wherein the step of judging whether the user meets a contract cancellation condition or not according to the contract time length comprises:
judging whether the contract time length reaches a time threshold or not;
if the contract time length reaches the time threshold, then further judging whether current time is within a preset time interval or not, and if the current time is within the preset time interval, then determining that the user meets the contract cancellation condition; and
if the contract time length does not reach the time threshold or the current time is not within the preset time interval, then determining that the user does not meet the contract cancellation condition.

4. The method according to claim 1, further comprising:
if the contract time length does not reach a time threshold, then generating a contract cancellation forbidding page, the contract cancellation forbidding page comprising prompting information for describing that the user is not allowed to apply for contract cancellation.

5. The method according to claim 1, wherein the step of if the user meets the contract cancellation condition, then generating a contract cancellation confirmation page comprises:
if the contract time length reaches a time threshold, then acquiring income data corresponding to the user identifier, and detecting whether income corresponding to the user identifier within a first preset time period is lower than a preset reference line or not; and
if the income corresponding to the user identifier within the first preset time period is lower than the preset reference line, then generating the contract cancellation confirmation page, the contract cancellation confirmation page further comprising prompting information for describing that the user is not required to pay compensation.

6. The method according to claim 5, wherein the step of if the user meets the contract cancellation condition, then generating a contract cancellation confirmation page further comprises:
if the income corresponding to the user identifier within the first preset time period is higher than the preset reference line, then generating the contract cancellation confirmation page, the contract cancellation confirmation page further comprising prompting information for describing that the user is required to pay compensation.

7. The method according to claim 5, wherein the step of if the user meets the contract cancellation condition, then generating a contract cancellation confirmation page further comprises:
if the income corresponding to the user identifier within the first preset time period is higher than the preset reference line, then judging whether the current time is within a preset time interval or not; and
if the current time is within the preset time interval, then generating the contract cancellation confirmation page, the contract cancellation confirmation page further comprising prompting information for describing that the user is required to pay compensation.

8. The method according to claim 6, wherein before the step of generating a contract cancellation confirmation page, the method further comprises:
acquiring income corresponding to the user identifier within a second preset time period, and calculating a compensation amount to be paid by the user according to the income corresponding to the user identifier within the second preset time period, the contract cancellation confirmation page further comprising the compensation amount to be paid by the user.

9. The method according to claim 7, further comprising:
if the current time is not within the preset time interval, then judging whether the current time is earlier than the preset time interval or not; and
if the current time is earlier than the preset time interval, then generating a contract cancellation forbidding page, the contract cancellation forbidding page comprising prompting information for describing that the user is not allowed to apply for contract cancellation and that the user is required to pay compensation.

10. The method according to claim 7, further comprising:
if the current time is not within the preset time interval, then judging whether the current time is earlier than the preset time interval or not; and
if the current time is later than the preset time interval, then generating the contract cancellation forbidding page, the contract cancellation forbidding page comprising prompting information for describing that the user need apply for contract cancellation during a contract cancellation period.

11. An apparatus for quitting a user group, comprising:
a receiving module, configured to receive, from a first terminal corresponding to a user, a user identifier, a contract cancellation command input by the user and a group identifier of a user group to which the user belongs;
a contract cancellation judgment module, configured to acquire a contract time length corresponding to the user identifier, and judge whether the user meets a contract cancellation condition or not according to the contract time length;
a page generation module, configured to, if the user meets the contract cancellation condition, generate a contract cancellation confirmation page, the contract cancellation confirmation page comprising an interface interaction element for inputting a contract cancellation confirmation command;
a display module, configured to display the contract cancellation confirmation page on the first terminal;
the receiving module further configured to receive the contract cancellation confirmation command from the first terminal; and
a deletion module, configured to delete the user identifier from a user list of the user group.

12. The apparatus according to claim 11, wherein the contract cancellation judgment module is configured to judge whether the contract time length reaches a time threshold or not, determine that the user meets the contract cancellation condition if the contract time length reaches the time threshold, otherwise determine that the user does not meet the contract cancellation condition.

13. The apparatus according to claim 11, wherein the contract cancellation judgment module is configured to judge whether the contract time length reaches a time threshold or not; if the contract time length reaches the time threshold, further judge whether current time is within a preset time interval or not, and if the current time is within the preset time interval, determine that the user meets the contract cancellation condition; and if the contract time length does not reach the time threshold or the current time is not within the preset time interval, determine that the user does not meet the contract cancellation condition.

14. The apparatus according to claim 11, wherein the page generation module is further configured to, if the contract time length does not reach a time threshold, generate a contract cancellation forbidding page, the contract cancellation forbidding page comprising prompting information for describing that the user is not allowed to apply for contract cancellation.

15. The apparatus according to claim 11, wherein the page generation module comprises:
an income detection module, configured to, if the contract time length reaches a time threshold, acquire income data corresponding to the user identifier, and detect whether income corresponding to the user identifier within a first preset time period is lower than a preset reference line or not; and
a first page generation module, configured to, if the income corresponding to the user identifier within the first preset time period is lower than the preset reference line, generate the contract cancellation confirmation page, the contract cancellation confirmation page further comprising prompting information for describing that the user is not required to pay compensation.

16. The apparatus according to claim 15, wherein the page generation module further comprises:
a second page generation module, configured to, if the income corresponding to the user identifier within the first preset time period is higher than the preset reference line, generate the contract cancellation confirmation page, the contract cancellation confirmation page further comprising prompting information for describing that the user is required to pay compensation.

17. The apparatus according to claim 15, wherein the page generation module further comprises:
a time interval judgment module, configured to, if the income corresponding to the user identifier within the first preset time period is higher than the preset reference line, judge whether the current time is within a preset time interval or not; and
a third page generation module, configured to, if the current time is within the preset time interval, generate the contract cancellation confirmation page, the contract cancellation confirmation page further comprising prompting information for describing that the user is required to pay compensation.

18. The apparatus according to claim 16, further comprising:
a compensation calculation module, configured to acquire income corresponding to the user identifier within a second preset time period, and calculate a compensation amount to be paid by the user according to the income corresponding to the user identifier within the second preset time period, the contract cancellation confirmation page further comprising the compensation amount to be paid by the user.

19. The apparatus according to claim 17, wherein the time interval judgment module is further configured to, if the current time is not within the preset time interval, judge whether the current time is earlier than the preset time interval or not; and
the third page generation module is further configured to, if the current time is earlier than the preset time interval, generate a contract cancellation forbidding page, the contract cancellation forbidding page comprising prompting information for describing that the user is not allowed to apply for contract cancellation and that the user is required to pay compensation.

20. The method according to claim 17, wherein the time interval judgment module is further configured to, if the current time is not within the preset time interval, judge whether the current time is earlier than the preset time interval or not; and
the third page generation module is further configured to, if the current time is later than the preset time interval, generate the contract cancellation forbidding page, the contract cancellation forbidding page comprising prompting information for describing that the user need apply for contract cancellation during a contract cancellation period.
